# EUROPEAN PATENT SPECIFICATION

(11) **EP 3 394 516 B1**
(45) Date of publication and mention of the grant of the patent: **12.02.2020**
(21) Application number: 16825658.4
(22) Date of filing: 21.12.2016
(51) Int. Cl.: F24C 15/16, A47J 37/06

(54) **OVEN SYSTEM FOR PRESSED FOOD ITEMS**
OFENSYSTEM FÜR GEPRESSTE LEBENSMITTEL
SYSTÈME DE FOUR POUR PRODUITS ALIMENTAIRES PRESSÉS

(30) Priority: 21.12.2015 US 201562270329 P
(43) Date of publication of application: 31.10.2018
(73) Proprietor: Turbochef Technologies, Inc., Carrollton, Texas 75007 (US)
(72) Inventor: POOL, James K, III., Carrollton Texas 75007 (US); ASHCRAFT, Pete, Carrollton Texas 75007 (US); JOBST, Karl, Carrollton Texas 75007 (US)
(74) Representative: Phillips & Leigh LLP
(86) International application number: PCT/US2016/068010
(87) International publication number: WO 2017/112764

(56) References cited:
- US-A1- 2009 107 343
- US-A1- 2010 270 282
- US-A1- 2014 285 078
- US-A1- 2015 272 387

## Description

Embodiments of the present disclosure relate generally to an oven system for pressed food items. The oven system is secured within an oven cooking cavity. An upper platen is configured to move up and down with respect to a lower platen in order to press a food item during the cooking process. The upper platen may remain in a lowered position so that the oven may be used without the pressing features described.

Panini sandwiches and other pressed food items are well known in today's marketplace. A Panini sandwich, Cuban sandwich, quesadilla, or other pressed sandwich or food item (generally referred to herein as a "pressed food item") is heated and pressed between two platens in order to compress the food item and to create grill marks. The traditional method for preparing a Panini sandwich is to place the sandwich in a Panini press machine. The machine typically consists of two hinged, ribbed, and heated platens. A sandwich is placed between the two platens and the platens are closed with respect to one another. The weight of the upper platen begins to press the food as it heats. A user may even choose to press down on the upper platen in order to compress the sandwich further. A typical sandwich may be positioned into the press machine having a sandwich height of between about 1.5 to 3 inches and will be compressed approximately 25-50%, depending upon the weight of the upper platen and the type of bread used.

Panini sandwiches and other pressed food items are an up-scale sandwich/food item that command a higher price than traditional toasted or grilled sandwiches. Given their popularity, there are many manufacturers of Panini press machines. The available machines, however, have similar problems. For example, they require several minutes to heat the sandwich. They require a thermal recovery. They do not heat the internal (center) of the sandwich consistently or adequately. In many jurisdictions, they require type 1 ventilation. They are purpose-built units and can do little more than press sandwiches. They may give off unpleasant odors. Cheese or other melt-able ingredients may ooze out sides or backs of the machines. The machines are also not long-lasting; primary customer complaints include that the platen coatings and hinge mechanisms fail. Accordingly, improvements to pressed sandwich/food item preparation are necessary.

US2015/2723 87 discloses a grilling apparatus for use in a cooking chamber of an oven. A guide is disposed connected to the door of the oven such that movement of the door automatically causes upper and lower cooking surfaces to move towards and away from each other.
US2009/0107343 discloses a dedicated oven in which a moving pressing member is provided to permit pressed food items to be prepared by pressing between the pressing member and a support member. When the pressing member is in a raised position and the oven is turned on, the oven can perform the usual cooking function of cooking the food.
US2010/0270282 discloses an oven with a vertically displaceable heating element. An oven is disclosed having at least two racks that may be adjusted to enclose or reveal food items placed between them.

Embodiments of the invention described herein thus provide systems and methods for creating a pressed food item in an oven cooking cavity. The oven system is secured within the oven cooking cavity and is not dependent upon oven door movement or any other oven function. An upper platen is configured to move up and down with respect to a lower platen in order to press a food item during the cooking process. The lower platen is generally secured with respect to the oven interior, whether to a jet plate, to an oven wall, or to a frame that is secured within the oven. The upper platen moves along a vertical support system. When the oven system is not in use to create a pressed food item, the upper platen can remain in a lowered position so that the oven may be used without the pressing features described.
FIG. 1 shows a side perspective view of one example of an oven system frame.
FIG. 2 shows the oven system frame of FIG. 1 with a lower platen in the process of being positioned.
FIG. 3 shows an oven system frame with an upper platen in the open position and a lower platen in a stable secured position.
FIG. 4 shows a side plan view of an oven cooking cavity with an oven system for pressed food items positioned therein.
FIG. 5 shows a side perspective view of the oven system of FIG. 3, with a detachable handle secured to the upper platen.
FIG. 6 shows a side perspective view of the oven system of FIG. 3, with the upper platen moved to the closed position.
FIG. 7 shows a side perspective view of the oven system of FIG. 3, with the detachable handle removed from the system.
FIG. 8 shows an exploded view of one example of a detachable handle.
FIG. 9 shows a side perspective view of an alternate embodiment of a vertical support system that uses vertical tracks.

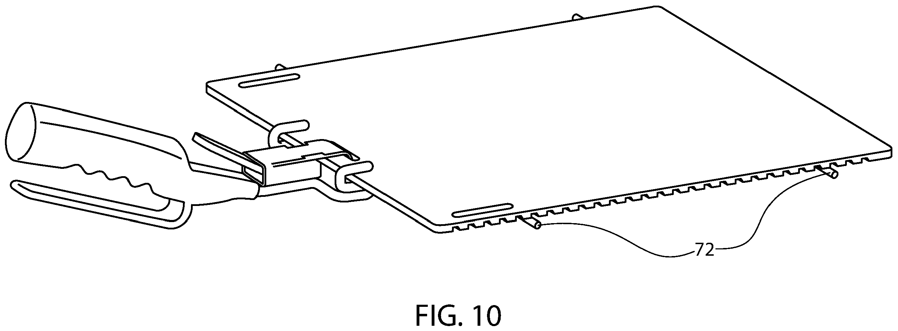

FIG. 10 shows a perspective view of an upper platen for use with the vertical tracks shown in FIG. 9.
FIG. 11 shows a side perspective view of an alternate embodiment of a door-activated pressing system.

Embodiments of the present invention provide an oven system for pressed food items. The system described herein may be used in connection with conventional ovens, convection ovens, toaster ovens, commercial ovens, residential ovens, or any other type of cooking device that has a cooking cavity. The oven system for pressed food items allows the pressing function of the platens to take place within a cooking cavity.

Referring now to the figures, the oven system 10 for pressed food items includes a lower platen 12, an upper platen 14, and a vertical support system 20. The lower platen 12 remains generally stationary in use, and the upper platen 14 is caused to move with respect thereto. The lower platen 12 is generally positioned parallel with respect to a lower surface or jet plate of the oven. The upper platen 14 is supported by the vertical support system 20 and moves therealong in order to be positioned between an open position, a closed position and a cooking position. In its open position, the upper platen 14 is generally parallel to the lower platen 12 so that the two platens 12, 14 define an open space between all edges of the platens (including the front edges as well as the back edges). They are not hinged together.

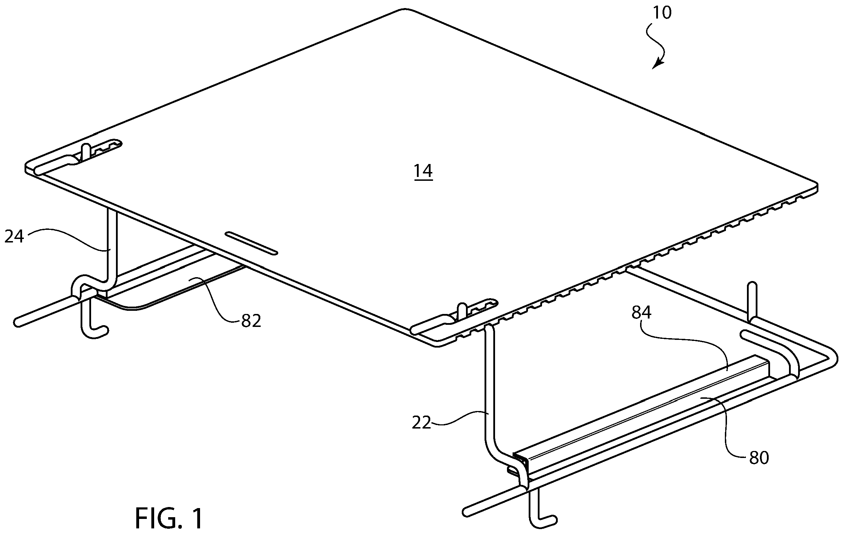

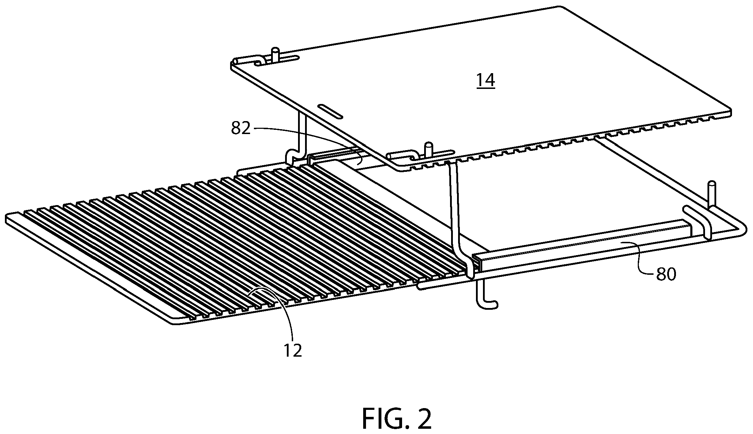

A standard oven can have the system 10 easily installed. In one example, the base structure of the system may be a wire rack or frame 80 that connects to the oven cavity. The frame 80 includes two vertical supports 22, 24. In one example, the frame 80 is formed as a wire rack with an inward facing lip 82 that can help support the lower platen 12 in use. FIG. 1 illustrates a frame 80 with an upper platen 14 in place and without a lower platen. FIG. 2 illustrates a lower platen 12 being positioned with respect to the frame 80. The lower platen 12 may rest on the inward facing lip 82 of the frame 80. The frame 80 may function like a drawer base, supporting the lower platen 12 as it slides in and out with respect to the frame 80. A side securement lip 84 may also be positioned on the frame 80. This side lip 84 can help prevent upward movement of the lower platen 12 once positioned.

The lower platen 12 is generally intended to remain stationary in use. The upper platen 14 is designed to be movable (i.e., raised and lowered) with respect to the lower platen 12, as described further below. The upper platen 14 may move along the vertical support system 20. In the examples shown, the vertical support system 20 is provided as first and second vertical supports 22, 24. One or both of the platens 12, 14 have vertical support system cooperating openings 26, 28 along plate edges 30. These openings 26, 28 are sized and shaped to receive vertical supports 22, 24 and to slide vertically as well as horizontally with respect thereto.

In one example, each of the lower and upper platens has a ribbed surface 32 and a flat surface 34. It is generally envisioned that the ribbed surface 32 be positioned on one side of the platen and that the flat surface 34 be positioned on the opposite side of the platen. However, it is also possible for a single surface of the platen to have both a ribbed surface and a flat surface on the same side. The ribbed surface 32 is designed to provide grill marks on the food item due to heat and compression. The flat surface 34 can still heat and compress the food item, but it does not provide grill marks due to the flat nature of the surface that remains in contact with the food item. In other examples, both the top and bottom surfaces of one or more of the platens may both be ribbed or both the top and bottom surfaces of one or more platens may both be flat. Any combination of these options is also envisioned. In the example illustrated by FIGS. 2-7, the ribbed surface 32 of the upper platen 14 is facing down and the ribbed the surface 32 of the lower platen 12 is facing up. This allows grill marks to be positioned on both sides of the food item compressed therebetween.

The platens 12, 14 may be removed from the vertical support system 20 in order to switch between the ribbed surface 32 or the flat surface 34. The platens 12, 14 may be also removed from the oven for cleaning. In one example, the platens 12, 14 and the frame 80 / vertical support system 20 may be assembled outside the oven and inserted as a complete rack system 10. Alternatively, the frame 80 may be positioned in the oven and then the platens 12, 14 positioned with respect thereto.

A specific embodiment of the oven rack system 10 for pressed food items described herein is intended for use with a rapid cook oven, such as the type manufactured and sold by TurboChef Technologies, Inc. of Carrollton, TX. Such ovens are generally intended for use in commercial food preparation and serving establishments. The oven rack system 10 finds particular use in connection with ovens that deliver forced hot air in combination with a microwave system, which can lead to a fast cooking process. However, it is also possible for the oven rack system 10 for pressed food items described herein to be used in connection with residential ovens or toaster ovens. In these instances, the securement of the rack with respect to the cooking cavity may be accomplished via the systems described herein or by any other appropriate securement systems appropriate for the oven in which the rack is used.

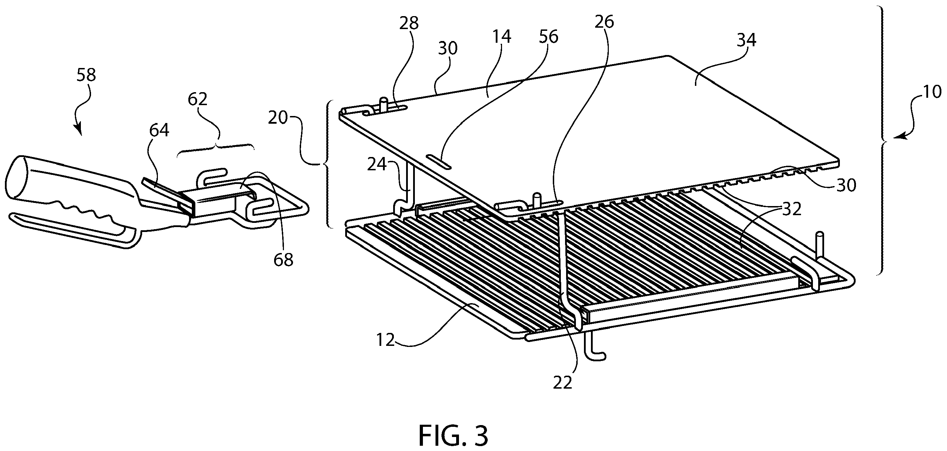

FIG. 3 illustrates the complete rack system 10 as it would be positioned within an oven. The upper platen 14 is shown in an open position. In this position, the first and second vertical supports 22, 24 extend through the openings 26, 28 of the upper platen 14. The openings 26, 28 of the upper platen 14 are positioned over the vertical supports 22, 24 so that upper portions of the supports fit inside the openings.

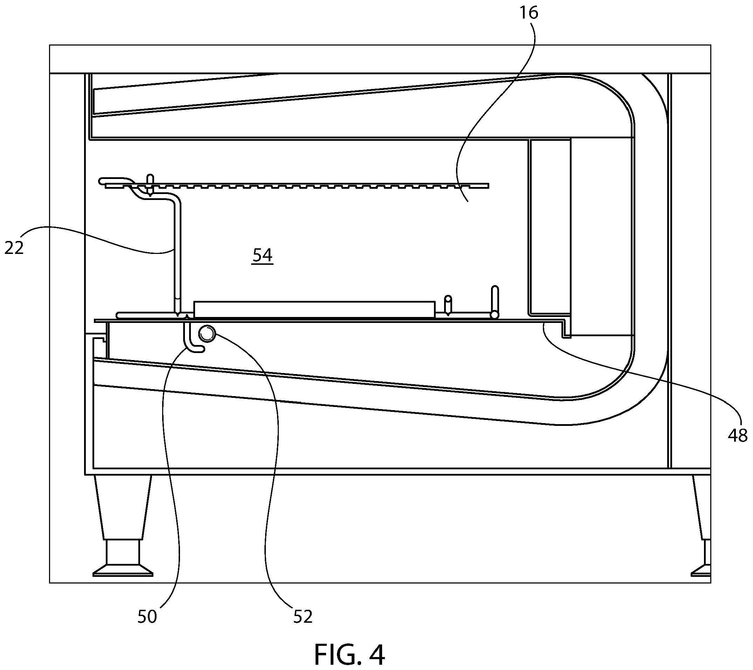

FIG. 4 illustrates one way in which the rack system 10 may be positioned within an oven cooking cavity 16. It should be understood, however, that securement of the rack system 10 into to the cooking cavity 16 may occur in various ways, some alternate versions of which are outlined at the end of this document. In the example illustrated, the frame 80 is stably secured with respect to the cooking cavity 16. The frame 80 is positioned with respect to a lower jet plate 48. The frame 80 has a lower connection feature 50. In the figures, the lower connection feature 50 is illustrated as a curved hook. The lower connection feature 50 can extend through a slot in the lower jet plate 48. The lower connection feature 50 can engage a stud 52 along an inner cavity wall 54. Although it is possible for only one of the securement options to be used, a combination of both can help confirm a secure positioning. Engagement of the lower connection feature 50 with the stud 52 locks the frame 80 into place. The frame 80 may be pushed forward in order to engage the lower connection feature 50 with the stud 52. Once the connection feature 50 has engaged the stud 52, the rack frame cannot move vertically. This securement also locks the jet plate 48 in place. The upper platen 14 is free to move along the vertical supports. In order to remove the rack frame from the oven, the frame can be slid forward and tilted so that the connection feature 50 slides away from and disengages the stud 52.

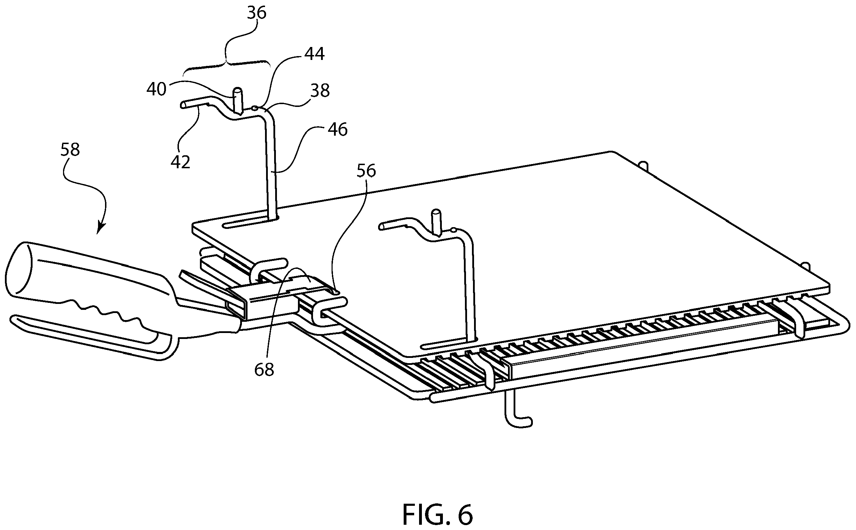

When the upper platen 14 is in the open position, the upper platen 14 is allowed to rest on a platform support 36 of each vertical support. For ease of discussion, a single vertical support 22 and platform support 36 is described, although it should be understood that both vertical supports have the same features. FIGS. 3-5 illustrate the platform support 36 with the upper platen 14 supported thereby. FIG. 6 illustrates the upper platen 14 once moved away from the platform supports 36 (and shows features of the platform supports more clearly).

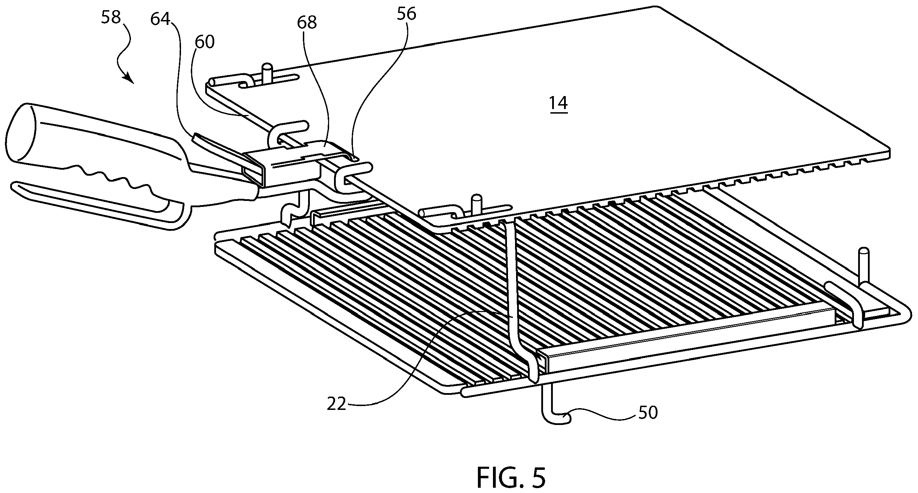

Each platform support 36 provides a surface on which the upper platen may rest and be supported. In a specific example, a platform support 36 may have a first horizontal element 38. The first horizontal element 38 is illustrated as having a stop post 40. In use, the stop post 40 prevents the upper platen 14 from moving too far forward or too far back with respect to the vertical support 22. The stop post 40 abuts an edge of one of the platen openings 26, 28. The first horizontal element 38 is also illustrated as having a detent system. In a specific embodiment, the detent system may be formed via cooperation between a nub 44 and a similarly-shaped indentation (not shown) in a lower surface of the upper platen 14. Because the platens may be reversible, an indentation may be provided along a similar location on both a top surface and a bottom surface of the upper platen 14. (Although it should be understood that the nub and detent locations may be reversed.) The platform support 36 is also shown as having a second horizontal element 42. This second horizontal element 42 may extend up through openings 26, 28 in use, as illustrated by FIG. 5.

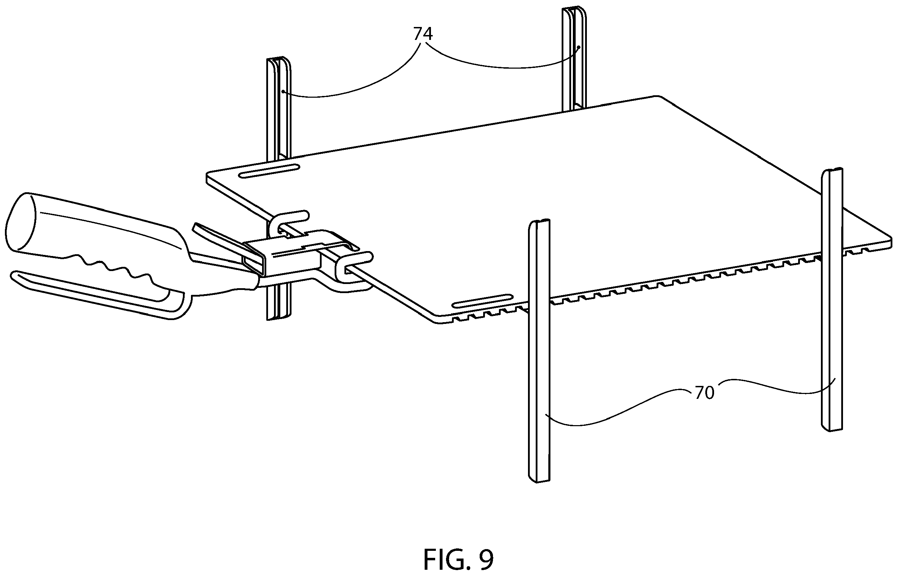

In an alternate example, the vertical support system may be a vertical track 70, as illustrated by FIG. 9. In this example, one or more vertical tracks 70 may be installed along sidewalls of the cooking cavity. In the example shown, there are four vertical tracks 70 in use. It is possible, however, to provide a single pair of vertical tracks, one along each side wall of the oven cooking cavity. Additional further tracks 70 may be used as well. The vertical tracks 70 are generally provided with an inner channel 74 that is sized and configured to receive a side peg 72 of the upper platen. The inner channel 74 may be notched, such that the side peg 72 may be stopped along any desired height. In another example, only the upper portion of the inner channel 74 is notched in order to receive and secure the side peg 72 in place so that the upper platen may be stopped and secured in its open position.

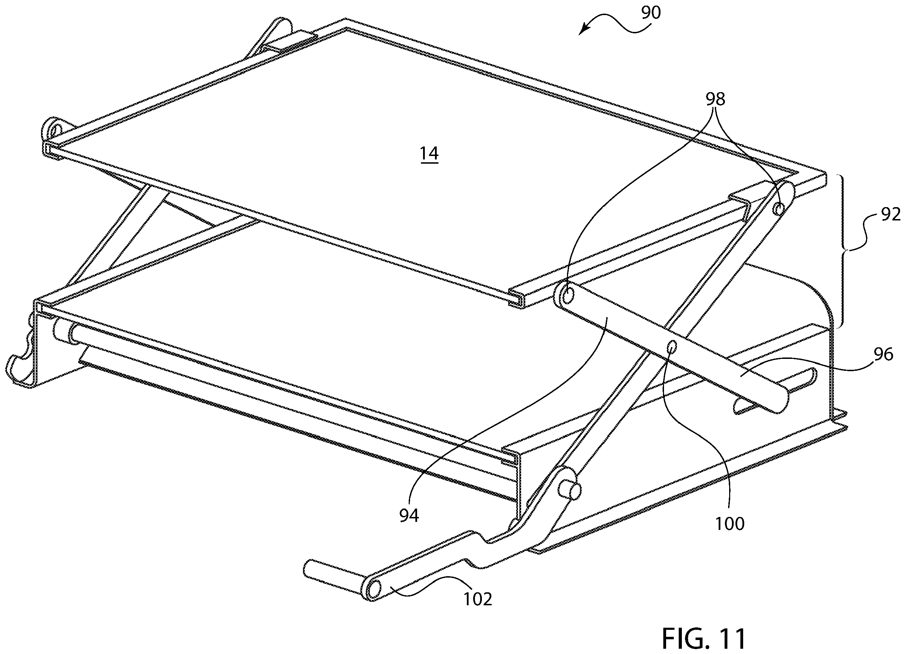

In a further alternate (not claimed herein), it is possible for the upper platen to move via operation of the oven door. In this version, opening and closing of the oven door causes raising and lowering of the upper platen. One example of such a door-activated pressing system 90 is illustrated by FIG. 11. This system 90 includes a scissor mechanism 92 that functions to raise and lower the upper platen 14. First scissor arm 94 is secured to an upper front portion of the upper platen 14 and a lower rear portion of the lower platen 12. Second scissor arm 96 is secured to an upper rear portion of the upper platen 14 and a lower front portion of the lower platen 12. Securement may be via pivot points 98. Central pivot 100 allows the scissor arms 94, 96 to raise and lower upon movement of activating arm 102. As illustrated, activating arm 102 is secured to at least one of the pivot points such that movement of the arm 102 causes movement of the scissor mechanism 92. Activating arm 102 may be secured to a lower pivot point or an upper pivot point. The activating arm connecting pivot point may be positioned directly on or along one of the platens. In another example, the activating arm connecting pivot point may be positioned on a base frame that supports one of the platens. The activating arm 102 is also secured to the oven door. Thus, when a user opens or closes the oven door, the activating arm 102 is forced to raise or lower, which in turn causes activation of the scissor mechanism 92 to either raise or lower the upper platen 14.

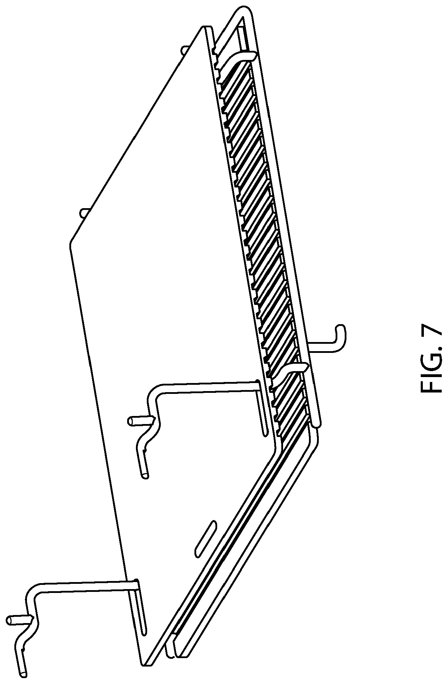

When the platens are in an open position, there is a space formed therebetween. When the system is intended to be used to create a pressed food item, the upper platen 14 is lowered. The lowered position of the upper platen 14 is illustrated by FIGS. 6 and 7 (without a sandwich or other food item positioned between the platens).

It is possible to raise and lower the upper platen 14 by hand, without a separate handle. However, once the oven system 10 has been used to heat and press a food item, the platens are likely too hot for manual handling. A user may wear an oven mitt in order to cause movement of the upper platen 14. However, this option may not be desirable in certain instances. Accordingly, in one embodiment, the upper platen 14 has a handle securement interface 56 that cooperates with a detachable handle 58. The handle securement interface 56 may be an opening along or close to an edge 60 of the platen that faces the oven door.

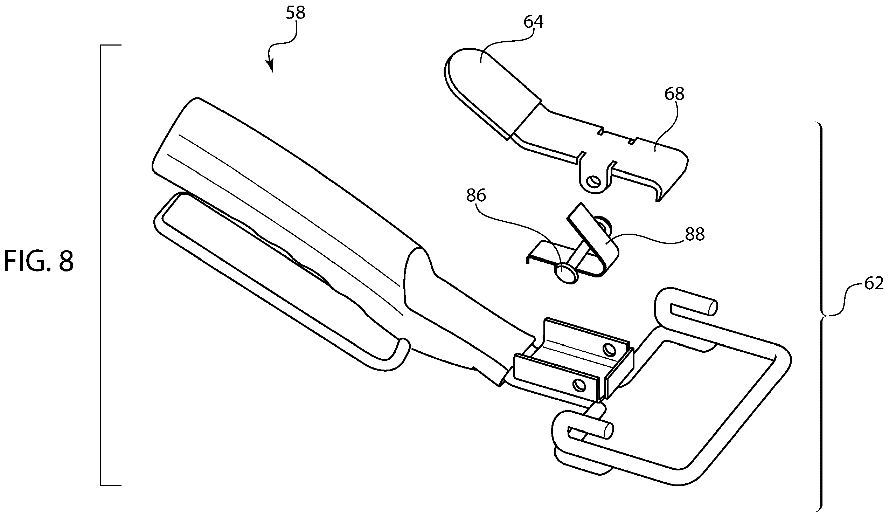

One example of a handle 58 is illustrated by FIG. 8. The detachable handle 58 may have openable jaws 62 that are operable via a hinge. Depression of a lever portion 64 may cause the jaws 62 to open. A clamp 68 of the jaws may then engage the handle securement interface 56. (Although the clamp 68 is illustrated as an upper clamp, it should be understood that the clamp 68 may be a lower clamp instead or as well.) Release of the lever portion 64 causes the jaws to close and secure the upper platen 14 with respect to the handle 58. The handle may have a locking pivot feature 86. Pressure on the lever portion 64 opens the jaws 62 and causes engagement of one of the clamp 68 with the plate opening 56. Release of pressure on the lever portion 64 allows a pivoting spring 88 to force the clamp 68 into the closed position. Once engaged, the handle 58 and the upper platen 14 are securely attached. Movement of the handle 58 then causes movement of the upper platen 14. Although one specific example of a handle is described herein, it should be understood that alternate options are possible and considered within the scope of this disclosure.

FIG. 5 illustrates a handle 58 being secured to the upper platen 14. FIG. 6 illustrates the upper platen 14 in its lowered/closed position, with a handle still secured thereto. In order to move between the position of FIG. 5 and the position of FIG. 6 (i.e., once the food product is loaded between the platens), the upper platen 14 is lifted by the operator by (in some instances, by engaging the handle 58) and sliding the openings 26, 28 away from the second horizontal element 42 of the platform support 36. The operator then tilts the upper platen slightly upward and forward over the stop post 40. Once the openings 26, 28 of the upper platen 14 are released from the platform support, the platen 14 may slide down the elongated portion 46 of each vertical support, lowering the upper platen 14 down onto the food product. Once the upper platen 14 is resting on the food product, the operator dis-engages the detachable handle by pressing the thumb lever 64, which opens the clamp 68. The system disclosed is designed to use gravity. The weight of the upper platen during the cook cycle is used to press and compress a sandwich or other food product.

When a sandwich or other food item is placed between the platens 12, 14 and the upper platen 14 is lowered on top of the sandwich by the operator, the two grill plates emulate a traditional Panini press. Because the sandwich is inside of a rapid cook oven or other oven environment, various heat-transfer technologies can be used to thoroughly heat the sandwich. A typical Panini sandwich requires 3-5 minutes in a press. If the oven system described herein is used in a TurboChef rapid cook oven, employment of microwave and high velocity impingement air can heat the sandwich or other food item in 45 seconds to 90 seconds and still provide the visual attributes of a Panini sandwich (pressed and grilled). The center of the sandwich or pressed food item is also fully heated. Because the press is positioned inside an oven, it is also possible to take advantage of the oven's catalytic filtration that destroys and grease, smoke, and/or off odors that can develop during the cooking process, obviating the need for a type 1 hood.

When the cook cycle is completed, the operator opens the oven door and re-engages the detachable handle 58 into the front slot 56 of the upper platen 14 by pressing the thumb lever 64 and engaging the clamp 68 with the opening 56 of the upper platen 14. The operator then moves the upper platen from its closed position to its open position. To move the upper platen 14 back to the open position, the upper platen is lifted vertically to the horizontal resting section (platform support 36) at the top of the vertical supports 22, 24. When the upper platen 14 reaches the top, the platen is pulled backwards and tilted slightly upwards so that the side openings 26, 28 fit over the post 40 on the platform support 36 of the vertical supports and can lock into the open position.

The finished food product is then removed from the oven. At this point, the operator can load another food product into the food press system 10 and repeat as described above to make another product, or lower the upper platen 14 from the open position to the closed position to cook a non-pressed product or simply close the oven door for the oven to remain in ready mode until the next pressed or non-pressed food item is to be cooked.

FIG. 7 illustrates the system positioned in the oven, with the upper platen 14 in a closed position. In this position, the upper platen 14 has been disengaged from the platform support 36 and is allowed to slide down the vertical supports 22, 24. If a food item to be pressed is present, the upper platen 14 contacts the food item (rather than the lower platen 12 as shown).

Some benefits of the oven system 10 described are that it is semiautomatic; there is not a complicated mechanical mechanism to fail. The plates are positioned within the oven cavity; they are not related to or operated with opening and closing of the oven door. The platens are easily replaceable. For example if the non-stick coating becomes worn or chipped or if the platens need to be periodically cleaned, they may interchanged with new ones. The system does not require thermal recovery because the platens are contained in a controlled heated environment. The system also allows for normal/non-pressed food item cooking without removing any internal structure or components. Providing the option of smooth and ribbed platens allows the operator to configure the oven for pressed, but non-grilled marked food items. The detachable/locking handle 58 easily engages and dis-engages from the upper platen, thus providing a safe and positive way to move the platen.

The platens can remain inside the oven cavity 16 and need only be activated when a panini-press type food product is desired. The remainder of the time, the upper platen 14 may remain in the closed position. In other words, when a pressed food item is not required, the upper platen 14 can be lowered and allowed to sit directly above the lower platen 12. If the top-side of the upper platen 14 is not ribbed or otherwise a flat surface, regular (non-panini) items may be cooked inside the oven. While the system is in the closed position, the oven can be used for all rapid cook cooking / heating applications as if there were no food pressing system 10 in the oven because the height of the upper plate is the same as the current base of the oven, and the vertical supports on the sides of the oven cavity do not obstruct loading and unloading of products in and out of the oven cavity. It is also possible to remove the upper platen 14 entirely. It is further possible to remove the entire frame completely. The oven system 10 described thus converts an oven from a standard rapid cook oven to a "panini oven" and then back to a standard rapid cook oven (whether with or without the system remaining in place in the oven), making it a convertible and semi-automated appliance.

The material of the platens is desirably conductive and has a high specific heat. In a specific example, the platens may be aluminum plates. It is possible for the platens to be made of any material currently used in panini press machines or any future materials that may be developed.

In alternate platen designs, the vertical supports 22, 24 of the vertical support system 20 may be integrally formed with the lower platen 12. For example, a lower portion of the vertical supports may be welded to the lower platen. In another example, the vertical support system 20 may cooperate with both the lower platen 12 and the upper platen 14. Both platens 12, 14 may have side openings 26, 28 for cooperating with the vertical supports 22, 24. In this way, both the lower and upper platens 12, 14 are allowed to move with respect to the support system 20. It should also be understood that more than two vertical supports may be used in system described (e.g., two front support rods and two rear support rods).

In a further example, the lower platen 12 may be secured directly to a lower rack or other structure of the cooking cavity 16. The lower platen 12 itself may have one or more side cooks or clips that allow it to be secured to a lower rack, such as a jet plate. The vertical supports 22, 24 need not cooperate with the lower platen 12 in this embodiment. They may be separately installed in the oven cavity. They may be positioned with respect to a frame 80 that does not support the lower platen 12. The lower platen may have a larger or small area than the upper platen 14.

## Claims

1. An oven system (10) for pressed food items, the oven system comprising :
a lower platen (12) configured to be positioned within an oven cooking cavity (16);
an upper platen (14) configured to move with respect to the lower platen (12) between an open position and a closed position,
a vertical support system (20) configured to allow the upper platen (14) to be raised and lowered with respect to the lower platen (12) and to secure the upper platen (14) into the open position and operable to permit the weight of the upper platen (14) to press food product placed between the upper platen (14) and lower platen (12) and configured such that an operator can:-
load a food product between the lower platen (12) and upper platen (14) to produce a pressed food product; or
lower the upper platen (14) from the open position to closed position to cook a non-pressed product.

2. An oven comprising an oven system as claimed in Claim 1.

3. The oven comprising an oven system of claim 2, wherein the vertical support system (20) comprises vertical supports (22, 24) and wherein the upper platen comprises one or more openings (26, 28) for cooperating with and along the vertical supports.

4. The oven comprising an oven system of either of claims 2 or 3, wherein the vertical support system comprises a vertical track (70) along sides of the cooking cavity, and wherein the upper platen comprises side pegs (72) for cooperating with and along the vertical track.

5. The oven comprising an oven system of any of the preceding claims, further comprising a frame (80) supporting the vertical support system.

6. The oven comprising an oven system of claim 5, wherein the frame comprises a lower connection feature (50) that extends through an oven jet plate and/or locks with respect to a stud (52) on an inner wall of the cooking cavity.

7. The oven comprising an oven system, of any of the preceding claims, wherein the vertical support system comprises first and second vertical supports (22, 24).

8. The oven comprising an oven system of claim 7comprising a frame (80) supporting the vertical support system, wherein the first vertical support (22) is positioned along a first side edge of the frame and the second vertical support (24) is positioned along a second side edge of the frame.

9. The oven comprising an oven system of claim 5, wherein the frame comprises an inward lip (82) and a side lip (84) for supporting the lower platen in use.

10. The oven comprising an oven system of any of the preceding claims, the upper platen (14) further comprising a handle securement interface (56).

11. The oven comprising an oven system of claim 10, further comprising a handle (58) for securing the handle securement interface for movement of the upper platen with respect to the lower platen.

12. The oven comprising an oven system of claim 10, wherein the handle securement interface is positioned on an oven front-facing surface of the upper platen.

13. The oven comprising an oven system of claim 11, wherein the handle (58) is detachable and comprises a lever portion (64) and openable jaws (62) for securing with respect to the upper platen.

14. The oven comprising an oven system of any of the preceding claims, wherein the lower platen and upper platen each have a first ribbed surface (32) and a second flat surface (34).

15. The oven comprising an oven system of any of claims 7 to 14, wherein the first and second vertical supports (22,24) each have a platform support (36).

16. The oven comprising an oven system of claim 15, wherein the platform support (36) comprises a stop post (40).

17. The oven comprising an oven system of claim 15, wherein the platform support comprises a detent system.

18. The oven comprising an oven system of claim 17, wherein the detent system comprises
a nub (44) on the platform support and an indentation on a contacting surface on the upper platen that receives the nub in use; or
a nub on the upper platen and an indentation on the platform support that receives the nub in use.

19. The oven comprising an oven system of any of the preceding claims, wherein the oven employs forced hot air and a microwave system.

20. A method for pressing a food item in an oven as claimed in any of claims 2-19, comprising:
moving the upper platen to an open position;
positioning a food item to be pressed on the lower platen;
lowering the upper platen to a closed position such that it contact the food item to be pressed.

21. The method of claim 20, further comprising providing a detachable handle (58), and attaching the detachable handle to the upper platen in order to move the upper platen between its open and closed positions.

## Patentansprüche

1. Ein Ofensystem (10) für gepresste Lebensmittel, wobei das Ofensystem umfasst:
eine untere Platte (12), die konfiguriert ist, um in einem Ofengarraum (16) positioniert zu werden;
eine obere Platte (14), die konfiguriert ist, um sich in Bezug auf die untere Platte (12) zwischen einer offenen Stellung und einer geschlossenen Stellung zu bewegen, ein vertikales Trägersystem (20), das konfiguriert ist, um zu ermöglichen, dass die obere Platte (14) in Bezug auf die untere Platte (12) angehoben und abgesenkt wird, und um die obere Platte (14) in der offenen Stellung zu sichern, und betreibbar ist, um das Gewicht der oberen Platte (14) zum Pressen von Nahrungsmitteln nutzen zu können, die zwischen der oberen Platte (14) und der unteren Platte (12) angeordnet und so konfiguriert sind, dass einem Nutzer Folgendes ermöglicht wird:
Laden eines Lebensmittelprodukts zwischen der unteren Platte (12) und der oberen Platte (14), um ein gepresstes Lebensmittelprodukt herzustellen; oder
Senken der oberen Platte (14) von der geöffneten Stellung in die geschlossene Stellung, um ein nicht gepresstes Produkt zu garen.

2. Ein Ofen enthaltend ein Ofensystem gemäß Anspruch 1.

3. Der Ofen enthaltend ein Ofensystem gemäß Anspruch 2, wobei das vertikale Trägersystem (20) vertikale Träger (22, 24) umfasst und wobei die obere Platte eine oder mehrere Öffnungen (26, 28) zum Zusammenwirken mit und entlang den vertikalen Trägern umfasst.

4. Der Ofen enthaltend ein Ofensystem gemäß Anspruch 2 oder 3, wobei das vertikale Trägersystem eine vertikale Schiene (70) entlang der Seiten des Garraums aufweist und wobei die obere Platte Seitenzapfen (72) zum Zusammenwirken mit und entlang der vertikalen Schiene aufweist.

5. Der Ofen enthaltend ein Ofensystem gemäß irgendeinem der vorhergehenden Ansprüche, ferner umfassend einen Rahmen (80), der das vertikale Trägersystem trägt.

6. Der Ofen enthaltend ein Ofensystem gemäß Anspruch 5, wobei der Rahmen ein unteres Verbindungsmerkmal (50) umfasst, das sich durch eine Ofenstrahlplatte erstreckt und/oder das in Bezug auf einen Zapfen (52) an einer Innenwand des Garraums einrastet.

7. Der Ofen enthaltend ein Ofensystem gemäß irgendeinem der vorhergehenden Ansprüche, wobei das vertikale Trägersystem erste und zweite vertikale Träger umfasst (22, 24).

8. Der Ofen enthaltend ein Ofensystem gemäß Anspruch 7, enthaltend einen Rahmen (80), der das vertikale Trägersystem trägt, wobei der erste vertikale Träger (22) entlang einer ersten Seitenkante des Rahmens positioniert ist und der zweite vertikale Träger (24) entlang einer zweiten Seitenkante des Rahmens positioniert ist.

9. Der Ofen enthaltend ein Ofensystem gemäß Anspruch 5, wobei der Rahmen eine Innenlippe (82) und eine Seitenlippe (84) zum Stützen der unteren Platte im Gebrauch aufweist.

10. Der Ofen enthaltend ein Ofensystem gemäß irgendeinem der vorhergehenden Ansprüche, wobei die obere Platte (14) ferner eine Griffbefestigungsschnittstelle (56) aufweist.

11. Der Ofen enthaltend ein Ofensystem gemäß Anspruch 10, ferner mit einem Griff (58) zum Sichern der Griffsicherungsschnittstelle für die Bewegung der oberen Platte in Bezug auf die untere Platte.

12. Der Ofen enthaltend ein Ofensystem gemäß Anspruch 10, wobei die Griffbefestigungsschnittstelle auf einer dem Ofen zugewandten Oberfläche der oberen Platte positioniert ist.

13. Der Ofen enthaltend ein Ofensystem gemäß Anspruch 11, wobei der Griff (58) abnehmbar ist und einen Hebelabschnitt (64) und zu öffnende Backen (62) zum Sichern in Bezug auf die obere Platte umfasst.

14. Der Ofen enthaltend ein Ofensystem gemäß irgendeinem der vorhergehenden Ansprüche, wobei die untere Platte und die obere Platte jeweils eine erste gerippte Oberfläche (32) und eine zweite flache Oberfläche (34) aufweisen.

15. Der Ofen enthaltend ein Ofensystem gemäß irgendeinem der Ansprüche 7 bis 14, wobei der erste und zweite vertikale Träger (22, 24) jeweils eine Plattformstütze (36) aufweist.

16. Der Ofen enthaltend ein Ofensystem gemäß Anspruch 15, wobei die Plattformstütze (36) einen Anschlagpfosten (40) aufweist.

17. Der Ofen enthaltend ein Ofensystem gemäß Anspruch 15, wobei die Plattformstütze ein Rastsystem umfasst.

18. Der Ofen enthaltend ein Ofensystem gemäß Anspruch 17, wobei das Rastsystem umfasst
eine Noppe (44) auf der Plattformstütze und eine Einbuchtung auf einer Kontaktfläche auf der oberen Platte, die die Noppe im Gebrauch aufnimmt; oder
eine Noppe auf der oberen Platte und eine Einbuchtung auf der Plattformstütze, die die Noppe im Gebrauch aufnimmt.

19. Der Ofen enthaltend ein Ofensystem gemäß irgendeinem der vorhergehenden Ansprüche, wobei der Ofen die Zufuhr von Heißluft und ein Mikrowellensystem umfasst.

20. Ein Verfahren zum Pressen eines Lebensmittels in einem Ofen gemäß irgendeinem der Ansprüche 2 bis 19 umfassend:
Bewegen der oberen Platte in eine offene Stellung;
Positionieren eines zu pressenden Nahrungsmittels auf der unteren Platte;
Absenken der oberen Platte in eine geschlossene Stellung, so dass sie das zu pressende Lebensmittel berührt.

21. Das Verfahren gemäß Anspruch 20, ferner umfassend das Bereitstellen eines abnehmbaren Griffs (58) und das Anbringen des abnehmbaren Griffs an der oberen Platte, um die obere Platte zwischen ihrer offenen oder geschlossenen Stellung zu bewegen.

## Revendications

1. Système de four (10) pour produits alimentaires pressés, le système de four comprenant :
un plateau inférieur (12) configuré pour être positionné à l'intérieur d'une cavité de cuisson de four (16) ;
un plateau supérieur (14) configuré pour se déplacer par rapport au plateau inférieur (12) entre une position ouverte et une position fermée,
un système de support vertical (20) configuré pour permettre au plateau supérieur (14) d'être élevé et abaissé par rapport au plateau inférieur (12) et pour fixer le plateau supérieur (14) dans la position ouverte et utilisable pour permettre le poids du plateau supérieur (14) de presser un produit alimentaire placé entre le plateau supérieur (14) et le plateau inférieur (12) et configuré de sorte qu'un opérateur peut : -
charger un produit alimentaire entre le plateau inférieur (12) et le plateau supérieur (14) pour produire un produit alimentaire pressé ; ou
abaisser le plateau supérieur (14) de la position ouverte à la position fermée pour cuire un produit non pressé.

2. Four comprenant un système de four selon la revendication 1.

3. Four comprenant un système de four selon la revendication 2, dans lequel le système de support vertical (20) comprend des supports verticaux (22, 24) et dans lequel le plateau supérieur comprend une ou plusieurs ouvertures (26, 28) pour coopérer avec et le long des supports verticaux.

4. Four comprenant un système de four selon l'une ou l'autre des revendications 2 ou 3, dans lequel le système de support vertical comprend une piste verticale (70) le long de côtés de la cavité de cuisson, et dans lequel le plateau supérieur comprend des chevilles latérales (72) pour coopérer avec et le long de la piste verticale.

5. Four comprenant un système de four selon l'une quelconque des revendications précédentes, comprenant en outre un cadre (80) supportant le système de support vertical.

6. Four comprenant un système de four selon la revendication 5, dans lequel le cadre comprend une caractéristique de connexion inférieure (50) qui s'étend à travers une plaque à jet de four et/ou des verrous par rapport à un goujon (52) sur une paroi intérieure de la cavité de cuisson.

7. Four comprenant un système de four selon l'une quelconque des revendications précédentes, dans lequel le système de support vertical comprend des premier et second supports verticaux (22, 24).

8. Four comprenant un système de four selon la revendication 7 comprenant un cadre (80) supportant le système de support vertical, dans lequel le premier support vertical (22) est positionné le long d'un premier bord latéral du cadre et le second support vertical (24) est positionné le long d'un second bord latéral du cadre.

9. Four comprenant un système de four selon la revendication 5, dans lequel le cadre comprend une lèvre intérieure (82) et une lèvre latérale (84) pour supporter le plateau inférieur en utilisation.

10. Four comprenant un système de four selon l'une quelconque des revendications précédentes, le plateau supérieur (14) comprenant en outre une interface de fixation de poignée (56).

11. Four comprend un système de four selon la revendication 10, comprenant en outre une poignée (58) pour fixer l'interface de fixation de poignée pour un déplacement du plateau supérieur par rapport au plateau inférieur.

12. Four comprenant un système de four selon la revendication 10, dans lequel l'interface de fixation de poignée est positionnée sur une surface tournée vers l'avant du four du plateau supérieur.

13. Four comprenant un système de four selon la revendication 11, dans lequel la poignée (58) est détachable et comprend une partie de levier (64) et des mâchoires pouvant être ouvertes (62) pour une fixation par rapport au plateau supérieur.

14. Four comprenant un système de four selon l'une quelconque des revendications précédentes, dans lequel le plateau inférieur et le plateau supérieur présentent chacun une première surface nervurée (32) et une seconde surface plate (34).

15. Four comprenant un système de four selon l'une quelconque des revendications 7 à 14, dans lequel les premier et second supports verticaux (22, 24) présentent chacun un support de plate-forme (36).

16. Four comprenant un système de four selon la revendication 15, dans lequel le support de plate-forme (36) comprend un montant d'arrêt (40).

17. Four comprenant un système de four selon la revendication 15, dans lequel le support de plate-forme comprend un système de détente.

18. Four comprenant un système de four selon la revendication 17, dans lequel le système de détente comprend
une protubérance (44) sur le support de plate-forme et une empreinte sur une surface de contact sur le plateau supérieur qui reçoit la protubérance en utilisation ; ou
une protubérance sur le plateau supérieur et une empreinte sur le support de plate-forme qui reçoit la protubérance en utilisation.

19. Four comprenant un système de four selon l'une quelconque des revendications précédentes, dans lequel le four utilise de l'air chaud pulsé et un système de micro-ondes.

20. Procédé pour presser un produit alimentaire dans un four selon l'une quelconque des revendications 2-19, comprenant les étapes consistant à :
déplacer le plateau supérieur vers une position ouverte ;
positionner un produit alimentaire à presser sur le plateau inférieur ;
abaisser le plateau supérieur vers une position fermée de façon à ce qu'il entre en contact avec le produit alimentaire à presser.

21. Procédé selon la revendication 20, comprenant en outre la fourniture d'une poignée détachable (58), et la fixation de la poignée détachable au plateau supérieur afin de déplacer le plateau supérieur entre ses positions ouverte et fermée.
